# FASCICULE DE BREVET EUROPEEN

(11) **EP 2 535 219 B1**
(45) Date de publication et mention de la délivrance du brevet: **10.04.2019**
(21) Numéro de dépôt: 12171697.1
(22) Date de dépôt: 12.06.2012
(51) Int. Cl.: B60L 11/18, H02J 7/00, B60L 5/20, B60L 5/42, B60M 1/36

(54) **Dispositif de recharge en énergie pour un véhicule**
Energieaufladevorrichtung für ein Fahrzeug
Power recharging device for a vehicle

(30) Priorité: 14.06.2011 FR 1155167
(43) Date de publication de la demande: 19.12.2012
(73) Titulaire: ALSTOM Transport Technologies, 93400 Saint-Ouen (FR)
(72) Inventeur: Tuyeras, Gaëtan, 38230 CHAVANOZ (FR); Chantal, Olivier, Jean, Georges, 78260 Achères (FR); Moskowitz, Jean-Paul, 75012 PARIS (FR); Leouatni, Mohammed, 92110 CLICHY (FR); Garcia Marne, Angel, 08830 SANT BOI D LLOB (BARCELONA) (ES)
(74) Mandataire: Lavoix

(56) Documents cités:
- EP-A1- 0 968 873
- EP-A1- 2 275 300
- WO-A1-2004/020241
- DE-A1- 3 914 675

## Description

La présente invention concerne un dispositif de recharge en énergie pour un équipement de stockage embarqué à bord d'un véhicule, comprenant au moins un dispositif d'alimentation en énergie extérieur au véhicule, au moins un collecteur d'énergie fixé sur le véhicule, le collecteur d'énergie comprenant une partie centrale munie d'au moins une bande de frottement, destinée à l'alimentation du véhicule lorsque le véhicule se déplace, la partie centrale étant prolongée latéralement par au moins une corne formée d'une pièce en un matériau métallique et formant une surface supérieure.

De tels dispositifs de recharge sont utilisés notamment pour des véhicules ferroviaires et des véhicules électriques de transport en commun urbain comme des tramways ou des trolley-bus, qui sont autonomes en énergie sur tout ou partie de leur parcours. En effet, de plus en plus d'opérateurs de ces lignes ne souhaitent pas de caténaires dans leur centre ville, qui dégradent l'esthétisme des quartiers.

Dans ce cas, il est possible de prévoir le rechargement en énergie des véhicules lorsque ceux-ci sont arrêtés en station par contact statique entre des bandes de frottement du pantographe du véhicule et une ligne d'alimentation électrique. Une telle recharge en station s'effectue pendant une durée au plus égale à celle prévue pour la montée et la descente des voyageurs, typiquement entre 15 et 30 secondes. Cette durée doit être la plus courte possible afin de ne pas accroître inutilement la durée de trajet du véhicule. Recharger un dispositif de stockage d'énergie électrique, tel qu'une batterie ou un ensemble de supercondensateurs présentant à l'heure actuelle une puissance d'environ quelques centaines de kW compte tenu des limitations d'encombrement imposées par le véhicule, en un temps court n'excédant pas 30 secondes, nécessite de disposer d'un dispositif de recharge permettant l'échange d'une telle puissance sans détérioration des parties constitutives du dispositif du fait d'une surchauffe ni risque pour les usagers.

Or les collecteurs d'énergie de l'art antérieur sont conçus pour collecter l'énergie en contact glissant. En effet, le carbone des bandes de frottement d'un pantographe est utilisé pour ses propriétés de résistance à l'usure et de conduction d'électricité. Cependant, le carbone n'est pas assez bon conducteur électrique pour supporter sur un temps de plusieurs secondes un transfert de courant de plusieurs milliers d'Ampères sans s'échauffer à des températures conduisant en général à sa destruction : le contact glissant est donc nécessaire pour éviter la surchauffe des matériaux en contact.

EP 2 275 300 décrit un système ferroviaire électrique.

WO 2004/020241 et DE 3914675 décrivent des archets de pantographes de véhicules ferroviaires.

EP 0 968 873 décrit un réseau de transport en commun comportant un ensemble de véhicules de transport en commun électriques et des stations d'arrêt.

Un des buts de la présente invention est de fournir un dispositif de recharge en énergie électrique permettant la recharge d'équipements de stockage d'énergie embarqués à bord d'un véhicule sans présenter les inconvénients des dispositifs de l'art antérieur et sans induire d'échauffements qui entraînent la détérioration voire la destruction des composants le constituant. Il vise, plus spécifiquement, à améliorer les transferts d'énergie lors de la recharge à l'arrêt du véhicule.

A cet effet, l'invention a pour objet un dispositif de recharge en énergie selon la revendication 1.

Le dispositif de recharge en énergie selon l'invention peut également comprendre l'une ou plusieurs des caractéristiques des revendications 2 à 10, prise(s) isolément ou suivante toute(s) combinaison(s) techniquement possible(s).

L'invention sera mieux comprise à la lecture de la description qui va suivre, donnée uniquement à titre d'exemple et faite en se référant aux dessins annexés, sur lesquels :
- la figure 1 est une vue schématique de l'implémentation d'un dispositif de recharge selon l'invention sur une voie de circulation ;
- la figure 2 est une vue schématique en perspective d'un collecteur d'énergie du dispositif de recharge de la figure 1 ;
- la figure 3 est une vue schématique en section transversalement à la voie de circulation d'une partie du collecteur d'énergie de la figure 2 ;
- la figure 4 est une vue schématique en section transversalement à la voie de circulation du dispositif de recharge selon un premier mode de réalisation ;
- la figure 5 est une vue schématique analogue à la figure 4 d'un dispositif de recharge selon une variante du premier mode de réalisation ;
- la figure 6 est une vue schématique analogue à la figure 4 d'un dispositif de recharge selon un deuxième mode de réalisation ; et
- la figure 7 est une vue schématique analogue à la figure 4 d'un dispositif de recharge selon une variante du deuxième mode de réalisation.

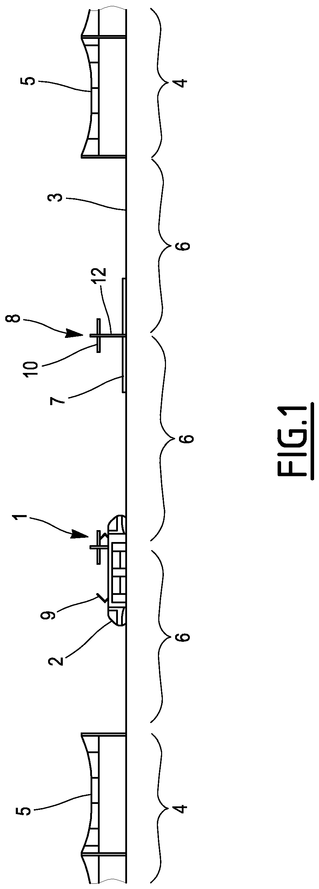

La figure 1 représente une vue schématique de l'implémentation d'un dispositif de recharge 1 selon l'invention pour un véhicule 2 circulant sur une voie 3 comprenant des portions 4 alimentées en énergie électrique par des caténaires 5 et des portions 6 non alimentées en énergie électrique. Des stations d'arrêt 7 du véhicule 2 sont agencées le long de la voie de circulation 3. Ces stations d'arrêt 7 correspondent par exemple à des gares, dans lesquelles le véhicule 2 est susceptible de s'arrêter pour permettre la montée ou la descente de voyageurs. Certaines stations d'arrêt 7 sont situées dans les portions 6 non alimentées en énergie électrique. D'autres stations d'arrêt 7 sont situées dans les portions 4 alimentées en énergie électrique.

Le véhicule 2 est notamment un véhicule ferroviaire ou un véhicule électrique de transport en commun urbain tel qu'un tramway ou un trolley-bus.

Lorsqu'il circule dans les portions 4 alimentées en énergie électrique par les caténaires 5, le véhicule 2 est alimenté en énergie électrique par la mise en contact de bandes de frottement d'un pantographe du véhicule 2 avec la caténaire 5. Lorsqu'il circule dans les portions 6 non alimentées en énergie électrique, le véhicule 2 consomme l'énergie électrique stockée dans des équipements de stockage, par exemple des batteries ou des ensembles de supercondensateurs, embarqués à bord du véhicule 2. Le dispositif de recharge 1 selon l'invention est propre à assurer la recharge en énergie de ces équipements de stockage lorsque le véhicule est à l'arrêt dans une station d'arrêt 7.

Le dispositif de recharge 1 comprend un dispositif d'alimentation en énergie 8 extérieur au véhicule 2 et un collecteur d'énergie 9 disposé sur le véhicule 2. Le collecteur d'énergie 9 est propre à entrer en contact avec le dispositif d'alimentation en énergie 8 lorsque le véhicule 2 est à l'arrêt dans une station d'arrêt 7 pour assurer un échange d'énergie entre le collecteur d'énergie 9 et le dispositif d'alimentation 8 de manière à recharger les équipements de stockage d'énergie embarqués à bord du véhicule 2, le collecteur d'énergie 9 étant électriquement connecté auxdits équipements de stockage.

Le dispositif d'alimentation en énergie 8 est agencé au niveau de stations d'arrêt 7 situées dans des portions 6 non alimentées en énergie électrique ou de stations d'arrêt 7 situées dans des portions 4 alimentées en énergie électrique. Il est avantageusement situé dans une portion 6 non alimentée en énergie électrique. Pour son alimentation en énergie, il est relié à une sous-station de type connu (non représentée) qui distribue l'énergie électrique depuis un réseau de distribution d'énergie électrique. Le dispositif d'alimentation en énergie 8 distribue par exemple une tension continue de 750 V.

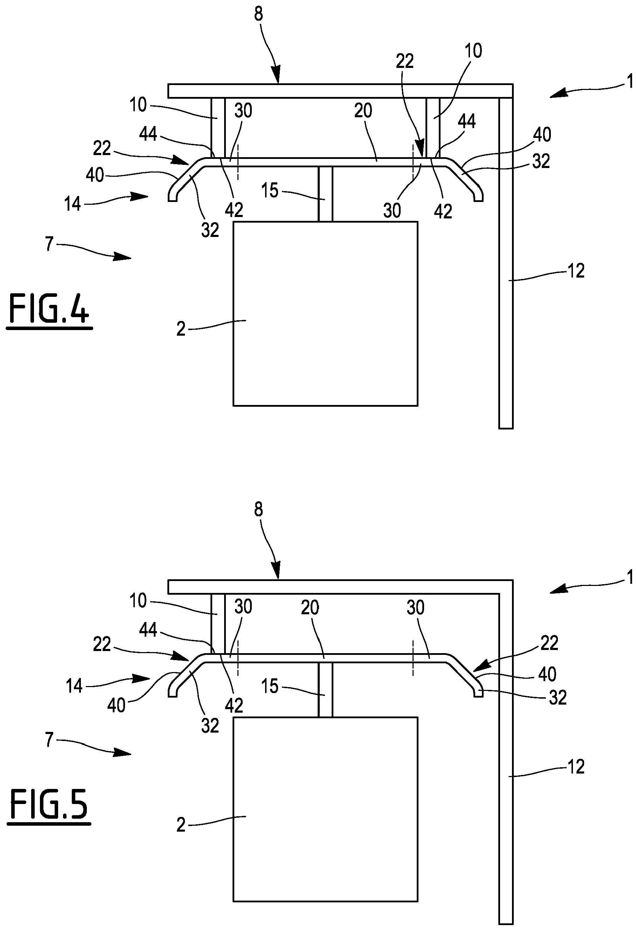

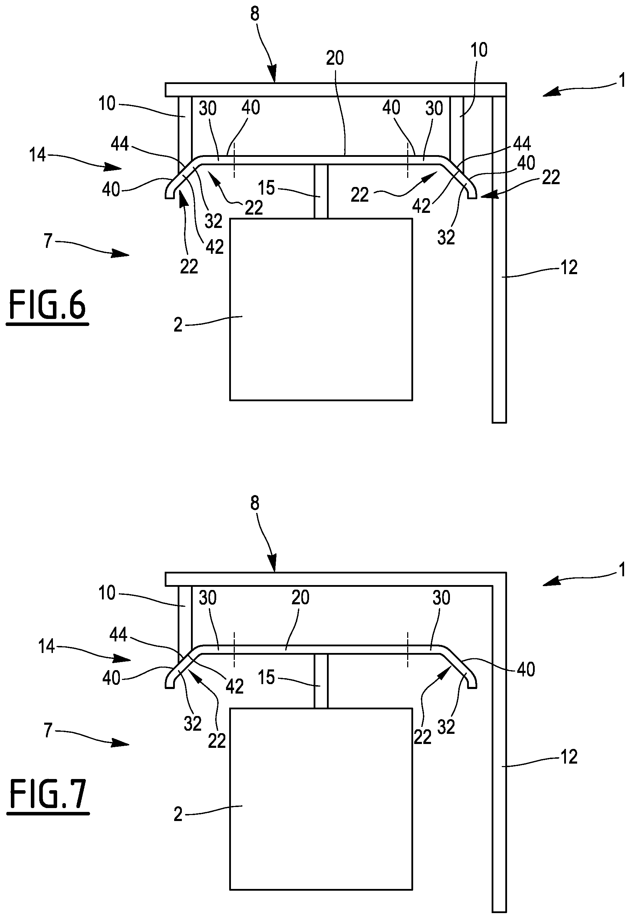

Dans le mode de réalisation représenté, le dispositif d'alimentation 8 est un dispositif d'alimentation aérien. Il comprend au moins un tronçon de caténaire rigide 10 propre à coopérer avec le collecteur d'énergie 9 du véhicule 2 lorsque le véhicule 2 est à l'arrêt dans une station d'arrêt 7. Selon un mode de réalisation (figures 4 et 6), il comprend deux tronçons de caténaire rigide 10, propres à coopérer chacun avec le collecteur d'énergie 9 du véhicule 2 et disposés de part et d'autre de la voie de circulation 3, notamment de manière symétrique par rapport à la voie 3. Chaque tronçon de caténaire rigide 10 est par exemple monté sur un poteau 12 implanté au bord de la voie 3 dans la station d'arrêt 7. En variante, les tronçons de caténaire rigide 10 sont montés sur un même poteau 12 implanté au bord de la voie 3 dans la station d'arrêt 7.

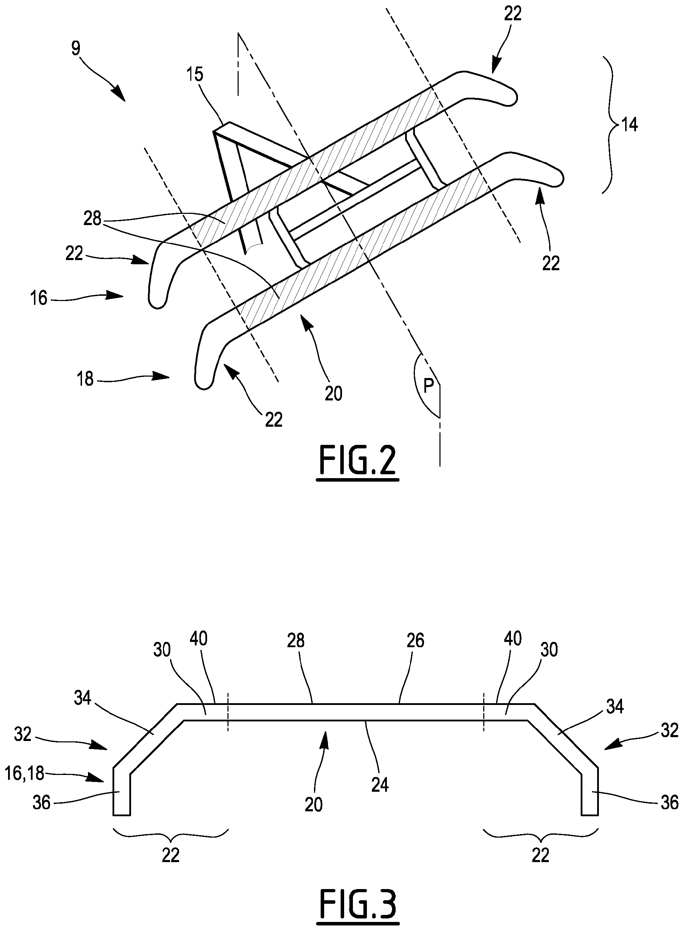

Dans le mode de réalisation représenté, le collecteur d'énergie 9 est un pantographe disposé sur le toit du véhicule 2. Comme illustré sur les figures 2 à 7, ce collecteur d'énergie 9 comporte une tête 14 simple ou multiple et une structure articulée 15 propre à déplacer la tête 14 entre une position de captage, dans laquelle la tête 14 est en contact avec les tronçons de caténaire rigide 10 du dispositif d'alimentation en énergie 8 et une position d'isolation, dans laquelle la tête 14 est à distance du dispositif d'alimentation en énergie 8, replié sur le toit du véhicule 2.

La tête 14 comprend deux archets 16,18 (figure 2) sensiblement parallèles entre eux. Les archets 16, 18 s'étendent selon une direction d'allongement perpendiculaire à la direction d'allongement du véhicule 2 et à la voie de circulation 3. Dans la suite de la description, la direction d'allongement des archets 16, 18 est appelée direction latérale. Chaque archet 16, 18 est symétrique par rapport à un plan médian P perpendiculaire à la direction latérale.

Chaque archet 16, 18 comprend une partie centrale 20 prolongée latéralement à chacune de ses extrémités par une partie d'extrémité ou corne 22 s'étendant selon la direction latérale. Ainsi, chaque archet 16, 18 comprend deux cornes 22 situées de part et d'autre de la partie centrale 20. Les cornes 22 sont rapportées sur la partie centrale 20, notamment par vissage ou par boulonnage, pour former l'archet 16, 18. La corne 22 forme un moyen de guidage de la caténaire 5 par rapport au collecteur d'énergie 9 propre à éviter que la caténaire 5 ne passe sous la tête 14 du collecteur d'énergie 9, notamment lors du passage d'un aiguillage. En fonctionnement normal, c'est-à-dire lorsque le véhicule 2 circule le long d'une portion de voie 3 rectiligne, les cornes 22 ne sont pas destinées à entrer en contact avec la caténaire 5.

La partie centrale 20 est sensiblement rectiligne. Elle s'étend sensiblement horizontalement. Elle comprend une surface inférieure 24 orientée vers le toit du véhicule 2 et une surface supérieure 26 opposée à la surface inférieure 24. Au moins une partie de sa surface supérieure 26 est formée par une bande de frottement 28. Cette bande de frottement 28 est typiquement en carbone. Lorsque le véhicule 2 se déplace le long d'une portion 4 de la voie 3 munie d'une caténaire 5, les bandes de frottement 28 du collecteur d'énergie 9 sont aptes à venir en contact avec la caténaire 5 de manière à assurer un transfert d'énergie entre la caténaire 5 et le collecteur d'énergie 9 lorsque le véhicule 2 roule. Le contact entre la caténaire 5 et les bandes de frottement 28 du collecteur d'énergie 9 est glissant et s'effectue lorsque le véhicule 2 se déplace. Le matériau utilisé pour former les bandes de frottement 28 est adapté pour un captage d'énergie optimisé sans échauffement au-delà du seuil critique lorsque le contact est frottant c'est-à-dire que le véhicule 2 se déplace le long de la caténaire 5.

Chaque corne 22 comprend une zone horizontale 30 s'étendant sensiblement dans l'alignement de la partie centrale 20 et une zone inclinée 32. La zone inclinée 32 est inclinée vers le bas par rapport à la partie centrale 20 et par rapport à la zone horizontale 30. Elle comprend un tronçon proximal 34 sensiblement rectiligne incliné vers le bas et à l'écart de la partie centrale 20, prolongé par un tronçon distal 36 sensiblement vertical. Une telle forme est adaptée au guidage décrit ci-dessus.

Chaque corne 22 est formée d'une seule pièce dans un matériau métallique. Le matériau métallique utilisé est un matériau présentant des conductivités thermique et électrique élevées, et notamment une conductivité thermique supérieure à 100 W.m⁻¹K⁻¹. Elle est notamment réalisée dans un matériau métallique tel que le cuivre, l'aluminium, l'or, l'argent ou des alliages de ces matériaux. La corne 22 formée d'une pièce définit une surface supérieure 40. Au moins une partie de cette surface supérieure 40 forme une zone de contact 42, propre à venir directement en contact avec une surface de contact correspondante 44 du dispositif d'alimentation en énergie 8 lorsque le véhicule 2 est à l'arrêt dans une station d'arrêt 7 pour assurer un transfert d'énergie entre le collecteur d'énergie 9 et le dispositif d'alimentation en énergie 8.

Le contact entre la zone de contact 42 et le dispositif d'alimentation 8 peut se faire de plusieurs façons, par exemple en un point de contact (contact ponctuel), en une ligne de contact (contact linéique) ou en une surface de contact (contact surfacique). Selon un mode de réalisation, le contact est surfacique.

Contact « direct » signifie qu'aucun élément rapporté sur la corne 22 n'est interposé entre la surface supérieure 40 et la surface 44 du dispositif d'alimentation en énergie 8. Lors du contact entre la surface de contact 44 du dispositif d'alimentation 8 et la zone de contact 42 du collecteur d'énergie 9, le métal constituant la corne 22 contacte directement, c'est-à-dire sans interposition d'un autre matériau, la surface de contact 44 du dispositif d'alimentation en énergie 8.

La surface supérieure 40 est une surface sensiblement continue au moins au niveau de la zone de contact 42 et au voisinage de celle-ci, c'est-à-dire qu'elle ne présente aucune arête vive au moins au niveau de la zone de contact 42 et au voisinage de celle-ci. En option, la surface supérieure 40 est continue sur toute sa longueur.

La partie de la surface supérieure 40 formant la zone de contact 42 ne présente pas de différence structurelle avec le reste de la surface supérieure 40.

La position de la zone de contact 42 sur la surface supérieure 40 est variable. Elle dépend de la localisation de la surface de contact 44 avec laquelle elle est destinée à coopérer lorsque le véhicule 2 est arrêté au niveau du dispositif d'alimentation 8 correspondant. Pour chaque station d'arrêt 7, la zone de contact 42 correspond à la partie de la surface supérieure 40 située au droit de la surface de contact 44 lorsque le véhicule 2 est arrêté dans la station d'arrêt 7. Les dimensions de la zone de contact 42 correspondent sensiblement aux dimensions de la surface de contact 44 de manière à maximiser le transfert d'énergie entre le collecteur d'énergie 9 et le dispositif d'alimentation en énergie 8 via la zone de contact 42 lorsque le véhicule 2 est à l'arrêt.

Chaque tronçon de caténaire rigide 10 est propre à coopérer avec les zones de contact 42 de chacun des deux archets 16, 18 situées du même côté de la voie 3. Chaque tronçon de caténaire rigide 10 est donc apte à coopérer avec deux zones de contact 42.

Selon un premier mode de réalisation du dispositif de recharge 1 illustré sur la figure 4, la surface de contact 44 du tronçon de caténaire rigide 10 est disposée de telle sorte que la zone de contact 42 est formée par une partie de la surface supérieure 40 de la zone horizontale 30 de la corne 22.

Selon un deuxième mode de réalisation représenté sur la figure 6, la surface de contact 44 du tronçon de caténaire rigide 10 est disposée de telle sorte que la zone de contact 42 est formée par une partie de la surface supérieure 40 de la zone inclinée 32 de la corne 22.

Lorsque le véhicule 2 s'arrête dans une station 7, il déploie le collecteur d'énergie 9 à l'aide de la structure articulée 15 de manière à mettre en contact les zones de contact 42 de la tête 14 avec les surfaces de contact 44 des tronçons de caténaire rigide 10 situés à l'aplomb des zones de contact 42. Un transfert d'énergie s'effectue alors entre le collecteur d'énergie 9 et le dispositif d'alimentation 8 via les zones de contact 42. On obtient ainsi une zone de transfert d'énergie au niveau de chacune des zones de contact 42. Ce transfert d'énergie est un transfert statique, c'est-à-dire qu'il s'effectue à l'arrêt.

A l'arrêt, le chemin électrique est ainsi le suivant : depuis les sous-stations de distribution d'énergie électrique vers les tronçons de caténaire rigide 10 et les surfaces de contact 44, depuis les surfaces de contact 44 vers les zones de contact 42 grâce au contact entre les surfaces de contact 44 et les zones de contact 42, puis depuis les zones de contact 42 le long des archets 16, 18 jusqu'à une zone de connexion à un câble d'alimentation (non représenté) du véhicule 2 connecté électriquement aux équipements de stockage d'énergie du véhicule 2.

Les figures 5 et 7 représentent respectivement des variantes des premier et deuxième modes de réalisation, dont la seule différence avec les premier et deuxième modes de réalisation est que le dispositif d'alimentation 8 ne comprend qu'un tronçon de caténaire rigide 10 disposé d'un côté de la voie de circulation 3 au lieu de deux tronçons de caténaire rigide 10 disposés de part et d'autre de la voie 3. La surface de contact 44 du tronçon de caténaire rigide 10 est propre à venir en contact avec une zone de contact 42 d'une corne 22 du collecteur d'énergie 9 située du même côté de la voie 3 que le tronçon de caténaire 10, la zone de contact 42 étant à l'aplomb de la surface 44 lorsque le véhicule 2 est à l'arrêt dans la station d'arrêt 7 correspondante. Seule une corne 22 de chaque archet 16, 18 est donc apte à venir en contact avec le dispositif d'alimentation 8. Il n'y a donc dans ces variantes qu'une seule zone de transfert d'énergie au niveau de chaque archet 16, 18. Cette zone est située d'un seul côté de la voie 3, à savoir le côté de la voie 3 où se trouve le tronçon de caténaire rigide 10. Cette configuration est plus simple à réaliser, plus économe en matériaux que celle selon les premier et deuxième modes de réalisation (figures 4 et 6). En revanche, la configuration selon les premier et deuxième modes de réalisation est préférable sur le plan mécanique (meilleure répartition des efforts mécaniques de par la symétrie dans les zones d'appui entre le dispositif d'alimentation en énergie 8 et le collecteur d'énergie 9) et permet des transferts d'énergie plus importants, du fait du doublement de la surface de transfert possible.

Dans le cadre de l'invention, les cornes de la tête, qui servent habituellement uniquement au guidage de la caténaire, sont utilisées pour assurer une nouvelle fonction, à savoir la fonction d'alimentation en énergie des véhicules à l'arrêt. Le transfert d'énergie se fait directement entre les cornes de la tête et le dispositif d'alimentation et ne nécessite pas de modifier structurellement les pantographes existants déjà montés sur les véhicules. L'invention fournit ainsi un système de recharge à l'arrêt de véhicules simple et peu coûteux à mettre en oeuvre, puisqu'il exige simplement de disposer dans les stations d'arrêt des dispositifs d'alimentation adaptés. L'invention propose ainsi un pantographe bi-mode, apte à être alimenté en énergie à la fois quand le véhicule roule par l'intermédiaire du contact glissant réalisé entre la caténaire et les bandes de frottement dans la partie centrale des archets et quand il est à l'arrêt par l'intermédiaire du contact entre les cornes et le dispositif d'alimentation, sans compliquer la cinématique du pantographe (il s'agit toujours des mouvements connus de déploiement et repliement de la tête), ni requérir des composants additionnels.

Le système de recharge selon l'invention est en outre particulièrement flexible. En effet, comme il n'est pas nécessaire d'ajouter des éléments rapportés sur la corne pour former la surface de contact, l'intégralité de la surface supérieure de la corne est susceptible de former la zone de contact, puisque toute la corne est formée d'une pièce dans le même matériau métallique. Comme cela a été expliqué précédemment, à chaque station d'arrêt, la position de la zone de contact sur la corne est uniquement définie par l'agencement des surfaces de contact du dispositif d'alimentation. Ainsi, il est possible, pour un même véhicule de prévoir dans une première station d'arrêt un agencement des surfaces de contact conduisant à une localisation de la zone de contact dans la partie horizontale de la corne et dans une deuxième station d'arrêt une localisation de la zone de contact dans la partie inclinée de la corne. Cette flexibilité permet par exemple d'adapter, dans chaque station d'arrêt, l'architecture du dispositif d'alimentation aux particularités de cette station, notamment en termes d'espace disponible.

Le dispositif de recharge selon l'invention engendre un très bon transfert d'énergie électrique entre le dispositif d'alimentation et le collecteur d'énergie tout en évitant un échauffement excessif de la zone de contact du collecteur d'énergie grâce à la bonne conductivité thermique et électrique du matériau formant la zone de contact. En effet, même si le transfert d'énergie électrique s'accompagne d'une production de chaleur par effet Joule dans la corne du pantographe, la chaleur produite est répartie par conduction à travers la corne et il ne se produit donc pas d'échauffement localisé excessif de la zone de contact.

## Revendications

1. Dispositif de recharge en énergie (1) pour un équipement de stockage embarqué à bord d'un véhicule (2), comprenant au moins un dispositif d'alimentation en énergie (8) extérieur au véhicule (2), au moins un collecteur d'énergie (9) fixé sur le véhicule (2), le collecteur d'énergie (9) comprenant une partie centrale (20) munie d'au moins une bande de frottement (28), destinée à l'alimentation du véhicule (2) lorsque le véhicule (2) se déplace, la partie centrale (20) étant prolongée latéralement par au moins une corne (22) formée d'une pièce en un matériau métallique et formant une surface supérieure (40),
**caractérisé en ce qu'**au moins une partie de la surface supérieure (40) de la corne (22) forme une zone de contact (42) propre à venir directement en contact avec une surface de contact (44) correspondante du dispositif d'alimentation en énergie (8) lorsque le véhicule (2) est à l'arrêt dans une station d'arrêt (7) pour assurer un transfert d'énergie entre le collecteur d'énergie (9) et le dispositif d'alimentation en énergie (8) par l'intermédiaire de la zone de contact (42).

2. Dispositif de recharge (1) selon la revendication 1, **caractérisé en ce que** la surface supérieure (40) de la corne (22) est continue au moins dans et au voisinage de la zone de contact (42).

3. Dispositif de recharge (1) selon l'une quelconque des revendications précédentes, **caractérisé en ce que** la corne (22) est réalisée dans un matériau présentant des conductivités thermique et électrique élevées, tel que l'aluminium, le cuivre, l'or ou l'argent.

4. Dispositif de recharge (1) selon l'une quelconque des revendications 1 à 3, **caractérisé en ce que** la position de la zone de contact (42) le long de la surface supérieure (40) de la corne (22) est variable, la zone de contact (42) étant définie, dans chaque station d'arrêt (7), comme la zone de la surface supérieure (40) se situant au droit de la surface de contact correspondante (44) du dispositif d'alimentation (8) lorsque le véhicule (2) est à l'arrêt dans la station d'arrêt (7).

5. Dispositif de recharge (1) selon l'une quelconque des revendications précédentes, **caractérisé en ce que** la corne (22) comprend une zone horizontale (30) sensiblement dans l'alignement de la partie centrale (20) et une zone inclinée (32).

6. Dispositif de recharge (1) selon la revendication 5, **caractérisé en ce que** la zone de contact (42) est formée par une partie de la surface supérieure (40) de la zone horizontale (30) et/ou par une partie de la surface supérieure (40) de la zone inclinée (32).

7. Dispositif de recharge (1) selon l'une quelconque des revendications précédentes, **caractérisé en ce que** la corne (22) est rapportée sur la partie centrale (20).

8. Dispositif de recharge (1) selon l'une quelconque des revendications précédentes, **caractérisé en ce que** le collecteur d'énergie (9) est un pantographe comprenant deux archets (16, 18).

9. Dispositif de recharge (1) selon la revendication 8, **caractérisé en ce que** chaque archet (16, 18) comprend une partie centrale (20) prolongée latéralement par deux cornes (22) disposées de part et d'autre de la partie centrale (20), chaque corne (22) étant apte à coopérer avec un dispositif d'alimentation (8).

10. Dispositif de recharge (1) selon l'une quelconque des revendications précédentes, **caractérisé en ce que** la corne (22) est formée par des moyens de guidage d'une caténaire (5) lors du déplacement du véhicule (2).

## Patentansprüche

1. Vorrichtung zur Energie-Wiederaufladung (1) für eine Speichereinrichtung, die an Bord eines Fahrzeugs (2) aufgenommen ist, aufweisend wenigstens eine Energie-Versorgungsvorrichtung (8) außerhalb des Fahrzeugs (2), wenigstens einen Energiekollektor (9), der an dem Fahrzeug (2) festgelegt ist, wobei der Energiekollektor (9) einen zentralen Teil (20) aufweist, der mit wenigstens einem Reibband (28) ausgestattet ist, das zur Versorgung des Fahrzeugs (2) bestimmt ist, wenn das Fahrzeug (2) fährt, wobei der zentrale Teil (20) seitlich verlängert ist durch wenigstens ein Horn (22), das aus einem Stück aus Metallmaterial gebildet ist und das eine obere Fläche (40) ausbildet,
**dadurch gekennzeichnet, dass** wenigstens ein Teil der oberen Fläche (40) des Horns (22) eine Kontaktzone (42) bildet, die imstande ist, direkt in Kontakt mit einer korrespondierenden Kontaktfläche (44) der Energie-Versorgungsvorrichtung (8) zu kommen, wenn das Fahrzeug (2) im Halt in einer Haltestation (7) ist, zum Gewährleisten eines Energietransfers zwischen dem Energiekollektor (9) und der Energie-Versorgungsvorrichtung (8) mittels der Kontaktzone (42).

2. Vorrichtung zur Wiederaufladung (1) gemäß Anspruch 1, **dadurch gekennzeichnet, dass** die obere Fläche (40) des Horns (22) zumindest in und benachbart zu der Kontaktzone (42) kontinuierlich ist.

3. Vorrichtung zur Wiederaufladung (1) gemäß irgendeinem der vorhergehenden Ansprüche, **dadurch gekennzeichnet, dass** das Horn (22) aus einem Material gemacht ist, das erhöhte thermische und elektrische Leitfähigkeit hat, wie Aluminium, Kupfer, Gold oder Silber.

4. Vorrichtung zur Wiederaufladung (1) gemäß irgendeinem der Ansprüche 1 bis 3, **dadurch gekennzeichnet, dass** die Position der Kontaktzone (42) entlang der oberen Fläche (40) des Horns (22) variabel ist, wobei die Kontaktzone (42), in jeder Haltestation (7), definiert ist als die Zone der oberen Fläche (40), die direkt unter der korrespondierenden Kontaktfläche (44) der Versorgungsvorrichtung (8) angeordnet ist, wenn das Fahrzeug (2) im Halt in der Haltestation (7) ist.

5. Vorrichtung zur Wiederaufladung (1) gemäß irgendeinem der vorhergehenden Ansprüche, **dadurch gekennzeichnet, dass** das Horn (22) einen horizontalen Bereich (30), der im Wesentlichen in Ausrichtung zu dem zentralen Teil (20) ist, und einen geneigten Bereich (32) aufweist.

6. Vorrichtung zur Wideraufladung (1) gemäß Anspruch 5, **dadurch gekennzeichnet, dass** die Kontaktzone (42) von einem Teil der oberen Fläche (40) des horizontalen Bereichs (30) und/oder von einem Teil der oberen Fläche (40) des geneigten Bereichs (32) gebildet ist.

7. Vorrichtung zur Wideraufladung (1) gemäß irgendeinem der vorhergehenden Ansprüche, **dadurch gekennzeichnet, dass** das Horn (22) an dem zentralen Teil (20) angestückt ist.

8. Vorrichtung zur Wiederaufladung (1) gemäß irgendeinem der vorhergehenden Ansprüche, **dadurch gekennzeichnet, dass** der Energiekollektor (9) ein Pantograf mit zwei Bögen (16, 18) ist.

9. Vorrichtung zur Wiederaufladung (1) gemäß Anspruch 8, **dadurch gekennzeichnet, dass** jeder Bogen (16, 18) einen zentralen Teil (20) aufweist, der seitlich von zwei Hörnern (22) verlängert ist, die beidseitig des zentralen Teils (20) angeordnet sind, wobei jedes Horn (22) angepasst ist, um mit einer Versorgungsvorrichtung (8) zusammenzuwirken.

10. Vorrichtung zur Wiederaufladung (1) gemäß irgendeinem der vorhergehenden Ansprüche, **dadurch gekennzeichnet, dass** das Horn (22) gebildet ist aus Mitteln zur Führung einer Oberleitung (5) beim Fahren des Fahrzeugs (2).

## Claims

1. A device (1) for recharging with energy a piece of storage equipment loaded on-board a vehicle (2) comprising at least one power supply device (8) external to the vehicle (2), at least one power collector (9) fixed on the vehicle (2), the power collector (9) comprising a central portion (20) provided with at least one friction strip (28) intended for powering the vehicle (2) when the vehicle (2) is moving, the central portion (20) being laterally extended with at least one horn (22) formed in one piece in a metal material and forming an upper surface (40),
**characterized in that** at least one portion of the upper surface (40) of the horn (22) forms a contact area (42) capable of directly coming into contact with a corresponding contact surface (44) of the power supply device (8) when the vehicle (2) is at a standstill in a stop station (7) in order to ensure energy transfer between the power collector (9) and the power supply device (8) via the contact area (42).

2. The recharging device (1) according to claim 1, **characterized in that** the upper surface (40) of the horn (22) is continuous at least in and in the vicinity of the contact area (42).

3. The recharging device (1) according to any of the preceding claims, **characterized in that** the horn (22) is made in a material having high heat and electric conductivities, such as aluminum, copper, gold or silver.

4. The recharging device (1) according to any of claims 1 to 3, **characterized in that** the position of the contact area (42) along the upper surface (40) of the horn (22) is variable, the contact area (42) being defined, in each stop station (7), as the area of the upper surface (40) facing the corresponding contact surface (44) of the power supply device (8) when the vehicle (2) is at a standstill in the stop station (7).

5. The recharging device (1) according to any of the preceding claims, **characterized in that** the horn (22) comprises a horizontal area (30) substantially in the alignment of the central portion (20) and an inclined area (32).

6. The recharging device (1) according to claim 5, **characterized in that** the contact area (42) is formed by a portion of the upper surface (40) of the horizontal area (30) and/or by a portion of the upper surface (40) of the inclined area (32).

7. The recharging device (1) according to any of the preceding claims, **characterized in that** the horn (22) is assembled to the central portion (20).

8. The recharging device (1) according to any of the preceding claims, **characterized in that** the power collector (9) is a pantograph comprising two bows (16, 18).

9. The recharging device (1) according to claim 8, **characterized in that** each bow (16, 18) comprises a central portion (20) laterally extended with two horns (22) positioned on either side of the central portion (20), each horn (22) being capable of cooperating with a power supply device (8).

10. The recharging device (1) according to any of the preceding claims, **characterized in that** the horn (22) is formed by means for guiding a catenary (5) during the displacement of the vehicle (2).
